# DEMANDE DE BREVET EUROPEEN

(11) **EP 0 773 507 A2**
(43) Date de publication de la demande: **14.05.1997**
(21) Numéro de dépôt: 96402047.3
(22) Date de dépôt: 26.09.1996
(51) Int. Cl.: G06K 7/10

(54) **Procédé d'authentification optique d'un média et éléments appliquant ce procédé**

(30) Priorité: 08.11.1995 FR 9513442
(71) Demandeur: Vezinet, Alain, 91200 Athis Mons (FR); Moisand, Jean-Claude, 78390 Bois d'Arcy (FR)
(72) Inventeur: Vezinet, Alain, 91200 Athis Mons (FR); Moisand, Jean-Claude, 78390 Bois d'Arcy (FR)
(74) Mandataire: Boivin, Claude

(57) **Abrégé**

Procédé d'authentification d'un média, solide ou liquide.

On incorpore au media des particules d'un composé organique capable d'absorber ou de réfléchir un rayonnement, dont la longueur d'onde est située dans l'infrarouge ou dans le proche infrarouge, et dont l'état transparent ou opaque peut être inversé de manière irréversible par chauffage à une température supérieure à la température ambiante ou par rayonnement ultraviolet et qu'on détermine l'état opaque ou non des particules.

## Description

Les cartes à piste magnétique font l'objet de fraudes de plus en plus nombreuses, leur code pouvant être surpris par exemple par suite d'un détournement de correspondance ou de la frappe imprudente du code dans un lieu public.

La présente invention a pour objet un procédé d'authentification d'un media ou matériau qui assure une haute sécurité.

Ce procédé consiste à incorporer au media des particules d'un composé organique capable d'absorber ou de réfléchir un rayonnement, dont la longueur d'onde est située dans l'infrarouge ou dans le proche infrarouge, et dont l'état transparent ou opaque peut être inversé de manière irréversible par chauffage à une température supérieure à la température ambiante ou par rayonnement ultra-violet, et à déterminer l'état, opaque ou non des particules incorporées au media.

Par longueur d'onde située dans l'infrarouge ou dans le proche infrarouge, on entend une longueur d'onde comprise entre 0,7 et 1,2 µm environ.

Comme composé organique, on peut utiliser par exemple un composé obtenu par réaction chimique entre un isocyanate et un groupement donneur d'hydrogène tel qu'un polyétherdiol.

Suivant le concept de réalisation du composé, les particules peuvent être normalement opaques ou réfléchissantes au rayonnement infrarouge et devenir transparentes par chauffage ou exposition à un rayonnement ultra-violet ou bien, au contraire, être normalement transparentes au rayonnement infrarouge et devenir opaques ou réfléchissantes par chauffage ou exposition au rayonnement ultra-violet.

Le procédé selon l'invention peut être appliqué à un matériau quelconque, solide ou liquide, par exemple un document tel qu'un billet de banque, un titre de transport, un titre d'identité ou encore un support textile,un titre notarié, administratif, judiciaire ou financier. Il suffit d'incorporer les particules dans une zone donnée du document.

Le procédé peut également être utilisé pour réaliser une carte d'autorisation d'accès ou d'achat qui assure une sécurité meilleure que la carte à piste magnétique. Dans ce cas, la piste comporte une piste optique constituée par un vernis transparent ou translucide auquel des particules ont été incorporées. La carte peut être codée, le codage étant obtenu en chauffant les endroits convenables de la piste, par exemple par une tête laser, une tête thermique ou des fils chauffants. Les particules organiques chauffées sont modifiées et l'état de transparence ou de non transparence des espaces qu'elles occupent est inversé; par exemple ils deviennent transparents à un rayonnement infrarouge alors que les particules non chauffées absorbent ou réfléchissent ce rayonnement. La lecture se fait ensuite en interposant la piste entre une source de rayonnement infrarouge et un capteur; elle peut aussi se faire par réflexion, la source et le capteur se trouvant d'un même côté de la piste. Le codage peut également être obtenu en soumettant les endroits convenables de la piste à un rayonnement ultra-violet.

La carte selon l'invention peut également comporter une piste magnétique. Cette piste magnétique peut être placée à côté de la piste optique. Les deux pistes peuvent également être superposées ou combinées, les particules organiques étant incorporées à la piste magnétique. Lorsque la piste optique est placée sur la piste magnétique, son vernis colmate les irrégularités de surface de la piste magnétique en donnant à la surface externe une rugosité extrêmement faible, de l'ordre de 10 nanomètres. On assure ainsi un meilleur contact entre les têtes de lecture de la piste et une meilleure tenue de la piste magnétique sur son support.

L'adjonction d'un code optique invisible à un code magnétique renforce considérablement la sécurité.

Le procédé peut aussi être appliqué à un liquide auquel on incorpore les particules; pour déterminer si le liquide est authentique ou non, il suffit par exemple d'en mettre quelques gouttes sur une plaque transparente et de déterminer après chauffage ou exposition à un rayonnement ultra-violet si l'ensemble est ou non transparent au rayonnement infrarouge.

On a décrit ci-après, à titre d'exemples non limitatifs, divers modes de mise en oeuvre de l'invention avec référence aux dessins annexés dans lesquels :
La Figure 1 est une vue en perspective d'une carte de sécurité selon l'invention;
La Figure 2 en est une coupe transversale;
La Figure 3 montre comment le codage peut être réalisé ;
La Figure 4 montre une variante de la Figure 3;
La Figure 5 montre comment est effectuée la lecture de la piste optique;
La Figure 6 montre un document authentifié selon l'invention;
La Figure 7 est une vue en perspective d'un dispositif pour la mise en oeuvre du procédé selon l'invention;
La Figure 8 est une vue à plus grande échelle d'un détail de ce dispositif.

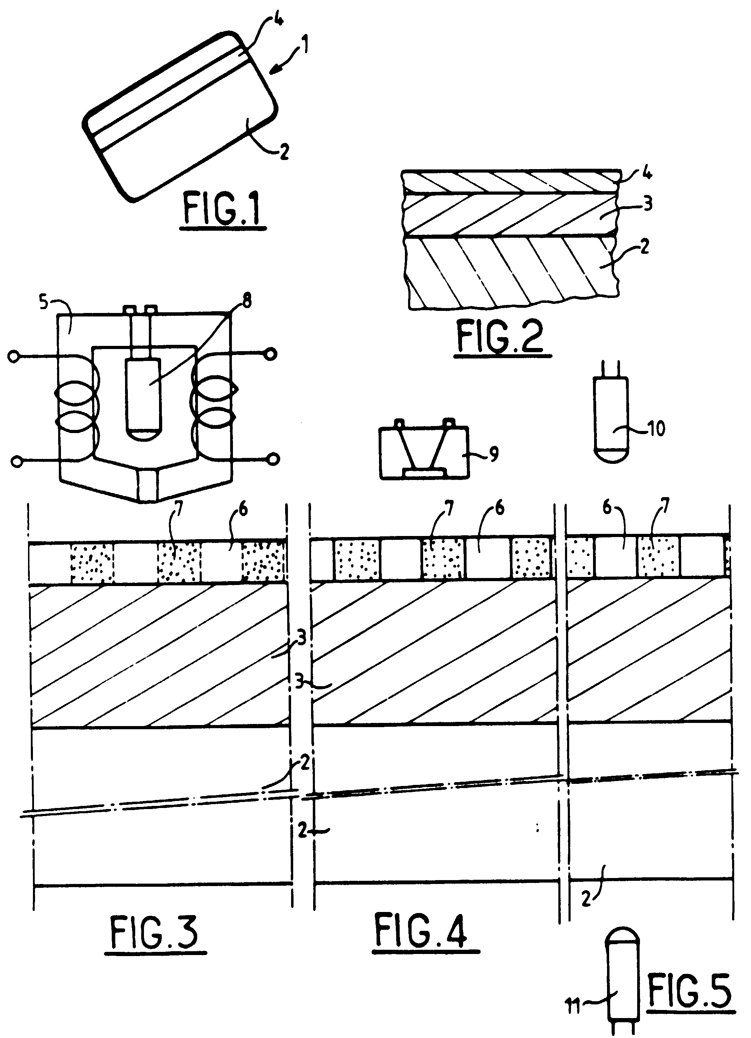

Les Figures 1 et 2 montrent une carte de sécurité 1 constituée par un support 2 sur lequel ont été disposées une piste magnétique codée 3 transparente aux rayons infrarouges et une piste optique 4 constituée par un vernis transparent et incolore tel qu'un vernis transparent et incolore tel qu'un vernis acrylique ou un vernis butyral auquel ont été incorporées suivant une proportion de 2 à 10% des particules d'un composé organique ayant des propriétés d'absorption ou de réflexion d'un rayonnement infrarouge et destructible par effet thermique ou photochimique. Ces deux pistes magnétique et optique peuvent être superposées, comme dans l'exemple représenté, combinées, les particules organiques étant ajoutées à la piste magnétique, ou encore disposées à côté l'une de l'autre. Le composé organique peut, par exemple, être obtenu par réaction chimique entre un isocyanate et un groupement donneur d'hydrogène tel qu'un polyétherdiol. Au composé organique ont été ajoutés un additif absorbant ou réfléchissant des rayons infrarouges tels qu'un oxyde d'étain ou de lithium et un marqueur d'identification tel que le soufre qui, par son spectre, permet d'identifier les particules organiques.

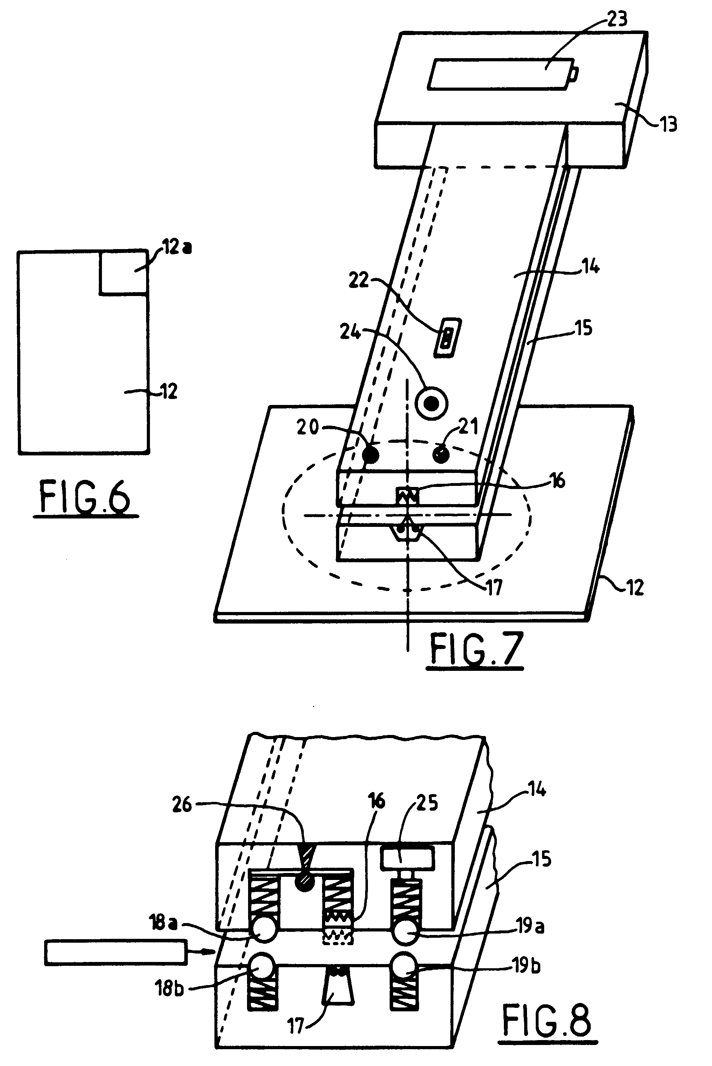

La piste magnétique 3 est codée et lue de la manière usuelle par une tête magnétique d'écriture-lecture 5. Le codage de la piste optique 4 peut être réalisé au moment du dépôt de cette piste; on peut également déposer la piste optique en continu et créer le code optique en détruisant par chauffage à une température de l'ordre de 125° ou à l'aide d'un rayonnement ultraviolet des zones telles que 6 qui deviennent alors transparentes au rayonnement infrarouge, la référence 7 désignant des zones non détruites de la piste 4. On peut à cet effet incorporer une diode laser 8 à la tête magnétique 5 (Figure 3) ou bien utiliser une tête thermique 9 comportant une résistance chauffante ou un émetteur ultraviolet (Figure 4).

Pour lire le codage de la piste optique 4, il suffit d'interposer cette piste entre une photodiode 10 émettant un rayonnement infrarouge et une photodiode de réception 11.

Pour effacer le codage optique, il suffit de chauffer l'ensemble de la piste 4 de façon à détruire des zones qui n'étaient pas détruites et qui deviennent alors transparentes au rayonnement infrarouge.

A la Figure 6, on voit un document 12, par exemple une carte d'identité ou un acte notarié, dans une zone 12a duquel ont été incorporées des particules de type décrit ci-dessus.

Les Figures 7 et 8 montrent une pince qui peut être utilisée pour authentifier un document.

Cette pince comprend un corps 13 solidaire de deux mâchoires allongées parallèles 14 et 15 légèrement écartées l'une de l'autre.

A son extrémité opposée au corps 13, la mâchoire 14 porte une résistance chauffante 16 alors que l'autre mâchoire 15 porte, en regard de cette résistance 16, un récepteur infrarouge 17. Les mâchoires 14 et 15 portent également des interrupteurs à bille montée sur ressort 18a-18b et 19a-19b. Ces interrupteurs et des diodes de signalisation 20 et 21 sont reliés par un circuit logique de commande, par l'intermédiaire d'un interrupteur général 22, à une source d'alimentation 23 logée dans le corps 13.

Pour authentifier un matériau par exemple le document 12, on l'introduit entre les mâchoires 14 et 15. Le document est alors immobilisé soit automatiquement par les interrupteurs 18a,18b,19a et 19b, soit par une action manuelle à l'aide du bouton 24.

L'introduction du document 12 déclenche :
1 - La mise en activité de la source d'alimentation 23 par l'action de la bille 19a sur le microrupteur 25 et rend opérationnel le récepteur infrarouge 17. Ce récepteur détecte instantanément, par exemple l'état de transparence au rayonnement infrarouge du document et commande immédiatement la signalisation de cet état en allumant, par exemple, la diode de signalisation rouge 21.
2 - La mise en contact de l'élément chauffant 16 avec le document 12, par l'action de l'interrupteur 18a et du mécanisme 26, liant l'interrupteur 18a à l'élément chauffant 16, l'élément chauffant 16 étant jusqu'alors hors tension donc non opérationnel.

Après une temporisation électronique, par exemple de deux secondes, l'élément chauffant 16 est mis sous tension et vient modifier l'état des particules de la zone située en regard qui passe de l'état transparent à l'état opaque au rayonnement infrarouge (ou inversement).

Le récepteur 17 qui est opérationnel depuis l'introduction du document 12, détecte instantanément le changement d'état, la diode rouge 21 s'éteint et la diode verte 20 est mise sous tension, authentifiant le document 12 qui est passé d'un état transparent à un état opaque au rayonnement infrarouge, de façon irréversible (ou inversement).

Il va de soi que la présente invention ne doit pas être considérée comme limitée au mode de réalisation décrit et représenté, mais en couvre, au contraire, toutes les variantes.

## Revendications

1. Procédé d'authentification d'un média, solide ou liquide,
caractérisé en ce qu'on incorpore au media des particules d'un composé organique capable d'absorber ou de réfléchir un rayonnement, dont la longueur d'onde est située dans l'infrarouge ou dans le proche infrarouge, et dont l'état transparent ou opaque peut être inversé de manière irréversible par chauffage à une température supérieure à la température ambiante ou par rayonnement ultra-violet et qu'on détermine l'état opaque ou non, des particules.

2. Procédé selon la revendication 1,
caractérisé en ce que les particules sont normalement opaques ou réfléchissantes au rayonnement infrarouge et deviennent transparentes par chauffage ou exposition au rayonnement ultra-violet.

3. Procédé selon la revendication 1,
caractérisé en ce que les particules sont normalement transparentes au rayonnement infrarouge et deviennent opaques ou réfléchissantes par chauffage ou exposition au rayonnement ultra-violet.

4. Procédé selon l'une des revendications 1 à 3,
caractérisé en ce que la longueur d'onde du rayonnement est comprise entre 0,7 et 1,2 µm.

5. Procédé selon l'une des revendications 1 à 4,
caractérisé en ce que le composé organique est obtenu par réaction chimique entre un isocyanate et un groupement donneur d'hydrogène tel qu'un polyetherdiol.

6. Media pour la mise en oeuvre du procédé selon la revendication 1,
caractérisé en ce qu'il est liquide et contient des particules.

7. Document pour la mise en oeuvre du procédé selon la revendication 1,
caractérisé en ce que les particules sont incorporées dans une zone de ce document.

8. Document selon la revendication 7,
caractérisé en ce qu'il est constitué par une carte d'autorisation d'accès ou de crédit qui comporte une piste optique constituée par un vernis transparent ou translucide auquel des particules ont été incorporées.

9. Carte de sécurité selon la revendication 8,
caractérisée en ce qu'elle comporte en outre une piste magnétique.

10. Carte de sécurité selon la revendication 9,
caractérisée en ce que les pistes magnétique et optique sont placées côte à côte sur un même support.

11. Carte de sécurité selon la revendication 9,
caractérisée en ce que la piste optique recouvre le piste magnétique, la surface externe de l'ensemble des pistes ayant une rugosité de l'ordre de 10 nanomètres.

12. Carte de sécurité selon la revendication 9,
caractérisée en ce que les pistes optique et magnétique sont combinées, les particules organiques étant incorporées à la piste magnétique.

13. Carte de sécurité selon l'une des revendications 8 à 12,
caractérisée en ce que la piste optique (4) contient un additif absorbant ou réfléchissant des rayons infrarouges tels qu'un oxyde de germanium, d'étain ou de lithium.

14. Carte de sécurité selon l'une des revendications précédentes 8 à 13,
caractérisée en ce que la piste optique (4) contient un marqueur d'identification tel que le soufre.

15. Dispositif d'authentification pour la mise en oeuvre du procédé selon la revendication 1,
caractérisé en ce qu'il comporte deux mâchoires (14 et 15) entre lesquelles on peut introduire le document (12) à authentifier, dont l'une porte un élément chauffant (16) alors que l'autre porte, en regard de cet élément chauffant, un capteur infrarouge (17).

16. Lecteur pour la mise en oeuvre du procédé selon la revendication 1,
caractérisé en ce qu'il comprend une source de rayonnement infrarouge (10) et un capteur de réception (11).
